# EUROPEAN PATENT APPLICATION

(11) **EP 4 625 264 A1**
(43) Date of publication of application: **01.10.2025**
(21) Application number: 24166659.3
(22) Date of filing: 27.03.2024
(51) Int. Cl.: G06N 10/20, G06N 10/40, G06N 10/70

(54) **A QUANTUM DEVICE AND A METHOD FOR OPERATING A QUANTUM DEVICE**

(71) Applicant: Imec VZW, 3001 Leuven (BE)
(72) Inventor: LI, Ruoyu, 3000 Leuven (BE); GODFRIN, Clement, 1000 Brussels (BE); KUBICEK, Stefan, 3212 Pellenberg (BE); SIMION, George Eduard, 3271 Scherpenheuvel-Zichem (BE); RAES, Bart, 2870 Puurs-Sint-Amands (BE)
(74) Representative: Lind Edlund Kenamets Intellectual Property AB

(57) **Abstract**

In an aspect there is provided a quantum device comprising: a semiconductor substrate; a first set of control gates configured to define a first row of electrostatically confined quantum dots and a second set of control gates configured to define a second row of electrostatically confined quantum dots, wherein each quantum dot is suitable for holding a spin qubit, and wherein the first and second rows extend in parallel in a longitudinal direction along the semiconductor substrate; and a qubit bus configured to define a row of qubit sites extending along the semiconductor substrate in parallel to and between the first and second rows of quantum dots, wherein each quantum dot of the first and second rows is configured to be tunnel coupled to a qubit site of the row of qubit sites so as to allow a spin qubit to be transferred between the quantum dot and the qubit bus, and wherein the qubit sites are configured to be sequentially tunnel coupled to each other so as to allow a spin qubit transferred to the qubit bus to be shuttled between the qubit sites of the row of qubit sites.

## Description

### TECHNICAL FIELD

The present invention generally relates to a quantum device and a method for operating a quantum device.

### BACKGROUND

Quantum processor architectures scalable to large qubit numbers is a current and very active a topic of research within the spin qubit community.

Semiconductor quantum dot-based qubit systems, in particular silicon-based, are promising candidates for large scale quantum processors. The qubits (i.e., "spin qubits") are generally encoded by the spin state of single electrons or holes trapped inside an electrostatically defined quantum dot. Advantages of semiconductor quantum dots include long quantum coherence time (enabling high fidelity operations and quantum error correction) and a small physical qubit size (enabling integration of large number of qubits). Furthermore, the quantum device structure is largely compatible with standard silicon manufacturing technology, thus promising scalable and rational fabrication.

To facilitate practically useful quantum computations, the number of qubits may advantageously be in the order of millions. Two-dimensional (2D) qubit arrays are typically considered since they are compatible with more error correction methods and enable implementing more efficient quantum algorithms, in comparison to linear (1D) qubit arrays.

### SUMMARY

There are technical challenges associated with upscaling the size of 2D qubit arrays. Unlike conventional electronic integrated circuits where the inputs and outputs of logic gates can be cascaded, qubit operations require application of wide frequency-range analog voltage signals (e.g., from DC to several GHz) to each individual qubit. This, combined with the physical size of the qubits being relatively small (e.g., a typical quantum dot pitch may be ~50-100 nm), makes it difficult to individually access each qubit, in particular qubits in central parts of a large 2D array, in view of wiring fanout and crosstalk effects.

It is an object of the present invention to provide a semiconductor quantum dot-based quantum device mitigating at least some of the challenges associated with up-scaling conventional two-dimensional qubit arrays, so as to enable a more easily scalable architecture. Further and alternative objectives may be understood from the following.

According to a first aspect of the present invention, there is provided a quantum device comprising: a semiconductor substrate; a first set of control gates configured to define a first row of electrostatically confined quantum dots and a second set of control gates configured to define a second row of electrostatically confined quantum dots, wherein each quantum dot is suitable for holding a spin qubit, and wherein the first and second rows extend in parallel in a longitudinal direction along the semiconductor substrate; and a qubit bus configured to define a row of qubit sites extending along the semiconductor substrate in parallel to and between the first and second rows of quantum dots, wherein each quantum dot of the first and second rows is configured to be tunnel coupled to a qubit site of the row of qubit sites so as to allow a spin qubit to be transferred between the quantum dot and the qubit bus, and wherein the qubit sites are configured to be sequentially tunnel coupled to each other so as to allow a spin qubit transferred to the qubit bus to be shuttled between the qubit sites of the row of qubit sites.

According to a second aspect of the present invention, there is provided a method for operating a quantum device comprising: defining, along a semiconductor substrate, a first row of electrostatically confined quantum dots using a first set of control gates, and a second set of control gates of electrostatically confined quantum dots using a second set of control gates, wherein each quantum dot is suitable for holding a spin qubit, and wherein the first and second rows extend in parallel in a longitudinal direction along the semiconductor substrate; and providing a qubit bus by defining a row of qubit sites extending along the semiconductor substrate in parallel to and between the first and second rows of quantum dots, wherein each quantum dot of the first and second rows is tunnel coupled to a qubit site of the row of qubit sites so as to allow a spin qubit to be transferred between the quantum dot and the qubit bus, and wherein the qubit sites are sequentially tunnel coupled to each other so as to allow a spin qubit transferred to the qubit bus to be shuttled between the qubit sites of the row of qubit sites.

On a conceptual level, the device and method of the present aspects are based on re-mapping a conventional 2D qubit array into a pair of linear 1D arrays (first and second rows of quantum dots) and an intermediate qubit bus. Hence, the number of qubits may be scaled at a lower rate than the N² rate of the 2D conventional qubit array. Assuming as an illustrative example implementation a quantum device comprising a pair of rows of quantum dots, and a qubit bus configured as a single row of quantum dots, an N² 2D qubit array may be replaced by a 3xM qubit array.

The quantum device architecture of the present disclosure furthermore allows beyond nearest neighbor qubit interactions. Since each quantum dot of the first and second rows is configured to be tunnel coupled to a qubit site of the row of sequentially qubit sites of the qubit bus, a qubit ("first target qubit") initially held or comprised in any one of the quantum dots of the first row ("first quantum dot"), may interact with a qubit ("second target qubit") held or comprised in any one of the quantum dots of the second row ("second quantum dot"). For example, the first target qubit may be transferred from the first quantum dot to the qubit site of the qubit bus coupled to the first quantum dot. The first target qubit may then be transferred (i.e., "shuttled") along the qubit bus to the qubit site coupled to the second quantum dot holding the second target qubit. The first target qubit in the qubit site and the second target qubit of the second quantum dot may then be subjected to a qubit operation, aided by the exchange coupling allowed by the tunnel coupling between the qubit site and the second quantum dot.

For example, in some embodiments, a two-qubit gate operation may be performed on a first qubit held in a first quantum dot of the first row of quantum dots and a second qubit held in a second quantum dot of the second row of quantum dots by: transferring the first qubit from the first quantum dot to a first qubit site of the row of qubit sites tunnel coupled to the quantum dot; shuttling the first qubit along the row of qubit sites to a second qubit site tunnel coupled to the second quantum dot; applying qubit control signals implementing the two-qubit gate operation to the first qubit in the second qubit site and the second qubit in the second quantum dot, wherein the first and second qubits are exchange coupled; after applying the qubit control signals, shuttling the first qubit along the row of qubit sites to the first qubit site; and subsequently transferring the first qubit from the first qubit site to the first quantum dot.

By relying on qubit shuttling to facilitate qubit-qubit interactions, technologies for long range qubit coupling or resonators for spin-photon coupling, which may be technically challenging to realize in current technologies, may be avoided.

A further advantage of the present quantum device is that the control gates may be individually connected from laterally opposite sides of the rows. As will become further apparent from the following, the architecture may therefore be realized using as few as two layers of fanout connections.

Moreover, the full architecture can be implemented with current CMOS technology, making it suitable for rational and scalable fabrication.

In some embodiments, each qubit site of the row of qubit sites is configured to be tunnel coupled to a respective quantum dot of the first row of quantum dots, and/or to a respective quantum dot of the second row of quantum dots. This may further contribute to a simplified fanout and also to a simplified control scheme, since each qubit site need only be coupled with one respective quantum dot of the first and/or second rows of quantum dots. This further allows limiting cross-talk between the qubit sites and the rows of quantum dots.

In some embodiments, each qubit site of at least a subset of the qubit sites of the row of qubit sites is configured to be defined between and tunnel coupled to a quantum dot of the first row and a quantum dot of the second row. This may reduce the number of horizontal shuttles needed to transfer a spin qubit from a quantum dot of the first row to a qubit site coupled to a quantum dot of the second row. The number of shuttling steps needed may be reduced since a qubit shuttled to each such qubit site of the at least a subset of qubit sites may interact with a qubit in either the first or second row.

In some embodiments, the quantum dots of the first row of quantum dots, the quantum dots of the second row of quantum dots, and the qubit sites of the row of qubit sites are defined with a substantially uniform pitch. This configuration may further contribute to a simple and regular layout of the quantum device.

In some embodiments, each qubit site of the row of qubit sites is aligned, along a lateral direction transverse to the longitudinal direction, with a respective quantum dot of the first row of quantum dots and/or a respective quantum dot of the second row of quantum dots. This configuration may further contribute to a simple and regular layout of the quantum device, in that each qubit site of the at least a subset of qubit sites may be aligned (along the lateral direction) with a quantum dot of the first and/or second rows.

Herein, the term "longitudinal direction", as used in relation to the respective rows of quantum dots and qubit sites, may interchangeably be referred to as a "row direction". Correspondingly, the "lateral direction" may interchangeably be referred to as "column direction".

In some embodiments, the qubit bus comprises first transfer gates and second transfer gates arranged at laterally opposite sides of the row of qubit sites (which for instance may comprise one or more rows of quantum dots, as set out below), wherein each first transfer gate is configured to control a tunnel coupling between a respective pair of a quantum dot of the first row of quantum dots and a qubit site of the row of qubit sites, and wherein each second transfer gate is configured to control a tunnel coupling between a respective pair of a quantum dot of the second row of quantum dots and a qubit site of the row of qubit sites.

The coupling, and optionally transfer, of qubits between the first (or second) row of quantum dots and the respective coupled qubit sites of the qubit bus may hence be controlled using a set of transfer gates.

In some embodiments, the row of qubit sites comprises a single electrostatically confined quantum dots, or a column of at least two tunnel coupled and electrostatically confined quantum dots. This configuration of the qubit bus may further contribute to a simple and regular layout of the quantum device in that also the qubit sites of the qubit bus, like the rows of quantum dots, may be provided as electrostatically confined quantum dots.

In both single- and two (or more)-row configurations of the qubit bus, the quantum dots of the qubit sites may be sequentially tunnel coupled along the row direction of the respective rows.

Where the row of qubit sites comprises, i.e. is configured as, a single row (third row) of electrostatically confined quantum dots, a 2D qubit array with N² quantum dots may be realized as a 3xM quantum dot array, where M denotes the number of quantum dots of each row.

Where the row of qubit sites comprises a column of at least two tunnel coupled and electrostatically confined quantum dots, a separation along the column direction (i.e., the lateral direction) between the first and second rows of quantum dots may be increased such that a risk of cross-talk between a quantum dot of the qubit bus and a non-targeted row of quantum dots may be mitigated. A 2D qubit array with N² quantum dots may be realized as a (2+B)xM quantum dot array, where B denotes the number of rows of quantum dots of the qubit bus, and M denotes the number of quantum dots of each row.

The row of qubit sites may for example comprise a third row of electrostatically confined quantum dots, wherein each quantum dot of the third row is tunnel coupled to a neighboring quantum dot of the first row, and a fourth row of electrostatically confined quantum dots, wherein each quantum dot of the fourth row is tunnel coupled to a neighboring quantum dot of the second row. The quantum dots of the third and fourth rows comprised in a same column may in turn be tunnel coupled to each other along the column direction, directly (where B=2) or via one or more intermediate quantum dots of the respective column (where B>2).

In some embodiments, the first set of control gates comprises first barrier gates and first plunger gates arranged alternatingly along the first row of quantum dots, and wherein the second set of control gates comprises second barrier gates and second plunger gates arranged alternatingly along the second row of quantum dots.

As used herein, the term "barrier gate" refers to a gate configured to confine the quantum dots in the longitudinal direction of the respective row. Each barrier gate may define a tunnel barrier between each pair of neighboring quantum dots.

As used herein, the term "plunger gate" refers to a gate configured to control a (electrochemical) potential of a respective quantum dot. Each plunger gate is hence associated with a respective quantum dot. Each plunger gate may control the charge accumulated at the associated quantum dot.

By an alternating arrangement of barrier and plunger gates, the confinement and coupling of qubits along the respective rows may be electrostatically controlled by a proper biasing scheme of the barrier and plunger gates. An electrostatic potential varying periodically along the longitudinal direction of the row of quantum dots may thus be created.

The barrier gates may typically have a substantially uniform gate length and be arranged with a substantially regular pitch. Correspondingly, the plunger gates may have a substantially uniform gate length and be substantially centered between a respective pair of barrier gates.

In some embodiments, the qubit bus further comprises barrier gates and plunger gates arranged alternatingly along the row of qubit sites, wherein the barrier gates are configured to control a tunnel coupling between the quantum dots of the row of qubit sites.

By an alternating arrangement of barrier and plunger gates, the coupling and/or transfer of qubits along the row of qubit sites may be electrostatically controlled by a proper biasing scheme of the barrier and plunger gates. An electrostatic potential varying periodically along the longitudinal direction of the row of quantum dots may thus be created.

The barrier gates may typically have a substantially uniform gate length and be arranged with a substantially regular pitch. Correspondingly, the plunger gates may have a substantially uniform gate length and be substantially centered between a respective pair of barrier gates.

In some embodiments, the first and second sets of control gates and the gates of the qubit bus are arranged in a common gate plane parallel to the semiconductor substrate. The gates may thus be formed in a single common metal plane. This contributes to a simple structure of the quantum device and enables a rational fabrication.

In some embodiments, the quantum dots of the first and second rows and of the qubit bus are comprised in a qubit array region having a longitudinal dimension extending in the longitudinal direction, wherein the qubit array area is surrounded by a first and a second peripheral region on opposite lateral sides of the qubit array region, and wherein the quantum device further comprises an interconnect structure comprising:
a first set of horizontal interconnects extending from the first peripheral region into the qubit array region to overlap the first set of control gates and being coupled thereto via a first set of vertical interconnects,
a second set of horizontal interconnects extending from the second peripheral region into the qubit array region to overlap the second set of control gates and being coupled thereto via a second set of vertical interconnects,
a third set of horizontal interconnects extending from the first peripheral region into the qubit array region to overlap the first transfer gates and being coupled thereto via a third set of vertical interconnects, and
a fourth set of horizontal interconnects extending from the second peripheral region into the qubit array region to overlap the second transfer gates and being coupled thereto via a fourth set of vertical interconnects.

This enables a simple fan-out and routing configuration for the gates. The first and third sets of interconnects, and the second and fourth sets of interconnects may extend into the qubit array region from opposite sides, thus routing congestion.

Correspondingly, the interconnect structure may further comprise a fifth set of horizontal interconnects extending to overlap the barrier gates of the qubit bus and being coupled thereto via a fifth set of vertical interconnects , and a sixth set of horizontal interconnects extending to overlap the plunger gates of the qubit bus and being coupled thereto via a sixth set of vertical interconnects, wherein the fifth set of horizontal interconnects and the sixth set of horizontal interconnects may extend into the qubit array region from the first peripheral region and the second peripheral region, respectively, or vice versa.

As used herein, the term "horizontal interconnect" refers to a metal interconnect (e.g., a metal line) routed horizontally, i.e., in a plane parallel to the substrate.

As used herein, the term "vertical interconnect" refers to a metal interconnect (e.g., a metal via) routed vertically, i.e., transverse or normal to the substrate.

In some embodiments, the first and second sets of horizontal interconnects are arranged in a first interconnect level of the interconnect structure and the third, fourth, fifth and sixth set of horizontal interconnects are arranged in an interconnect level of the interconnect structure over the first interconnect level, such as in a common second interconnect level. The horizontal interconnects for the gates may thus be accommodated in three metal layers, or where a common second interconnect level is employed, in only two metal layers.

In some embodiments, the semiconductor substrate, the common gate plane and the interconnect structure are comprised in a first integrated circuit of the quantum device and the quantum device further comprises a second integrated circuit stacked with the first integrated circuit and comprising control circuitry coupled to the interconnect structure and configured to control the first and second sets of control gates and the gates of the qubit bus.

Control circuitry may hence be stacked with the substrate, the control gates and the qubit bus. The control circuitry may hence be formed in a separate device tier using conventional CMOS integration technologies.

The control circuitry may for instance be configured to control the biasing of the gates. The control circuitry may further be configured to provide control signals for causing the transfer of qubits between the qubit rows and the qubit bus, and the shuttling along the qubit bus.

### BRIEF DESCRIPTION OF THE DRAWINGS

This and other aspects of the present invention will now be described in more detail, with reference to the appended drawings.
Fig. 1 is a schematic perspective view of a quantum device.
Fig. 2 is a top-down view of the quantum device of Fig. 1.
Fig. 3 is a top-down view showing, in isolation, a common gate plane of the quantum device.
Fig. 4 is a top-down view of a configuration of interconnects of a first interconnect level of an interconnect structure of the quantum device.
Fig. 5 is a top-down view of a configuration of interconnects of a second interconnect level of an interconnect structure of the quantum device.
Fig. 6 is a schematic representation of a qubit array region of the quantum device.
Fig. 7 shows a further example configuration of a qubit array region.
Fig. 8a-f schematically depict a two-qubit operation.
Fig. 9 is a schematic cross-sectional side view of a quantum device according to a further example.
Fig. 10 is a schematic representation of a qubit array region comprising a qubit bus of a further implementation.
Fig. 11 is a schematic representation of a qubit array region comprising 2D sub-arrays of quantum dots on either side of a qubit bus.
Fig. 12 is a schematic representation of a quantum device comprising plural 2D sub-arrays of quantum dots on either side of a qubit bus.

### DETAILED DESCRIPTION

It is to be noted that the drawings are only schematic and the relative dimensions of illustrated elements, such as layers or other structures, may be exaggerated and not drawn to scale. Rather the dimensions may be adapted for illustrational clarity and to facilitate understanding. When present in the figures, the indicated axes X, Y and Z point in a longitudinal direction (row direction), a lateral direction (column direction), and a vertical direction, respectively. The row direction X and the column direction Y both define in-plane directions or horizontal directions with respect to a substrate of the quantum device, i.e., parallel to a main plane of extension of the substrate. The vertical direction Z correspondingly defines an out-of-plane direction or normal direction to the substrate, i.e., transverse to a main plane of extension of the substrate.

Terms indicating relative vertical arrangement or orientations of elements, such as "top", "upper", "bottom", "lower", "downwardly", "upwardly", and the like, are to be understood in relation to the vertical direction Z.

It is to be noted that when an element (e.g. a layer or other structure) is referred to as being "on" another element, it can be directly on the other element or on one or more intermediate elements on the other element. Conversely, when an element is referred to as being "directly on" another element, there is no intermediate element and the element is thus formed in physical contact or abutment with the other element.

It is further to be noted that terms such as "first" and "second" etc. with reference to elements (e.g. gates, quantum dots, qubits, interconnects, interconnect levels, etc.) or, as the case may be, method steps, are used herein only as labels to facilitate distinguishing between different elements or steps, and need not necessarily imply that such elements or steps are arranged or performed in that particular order, unless stated otherwise.

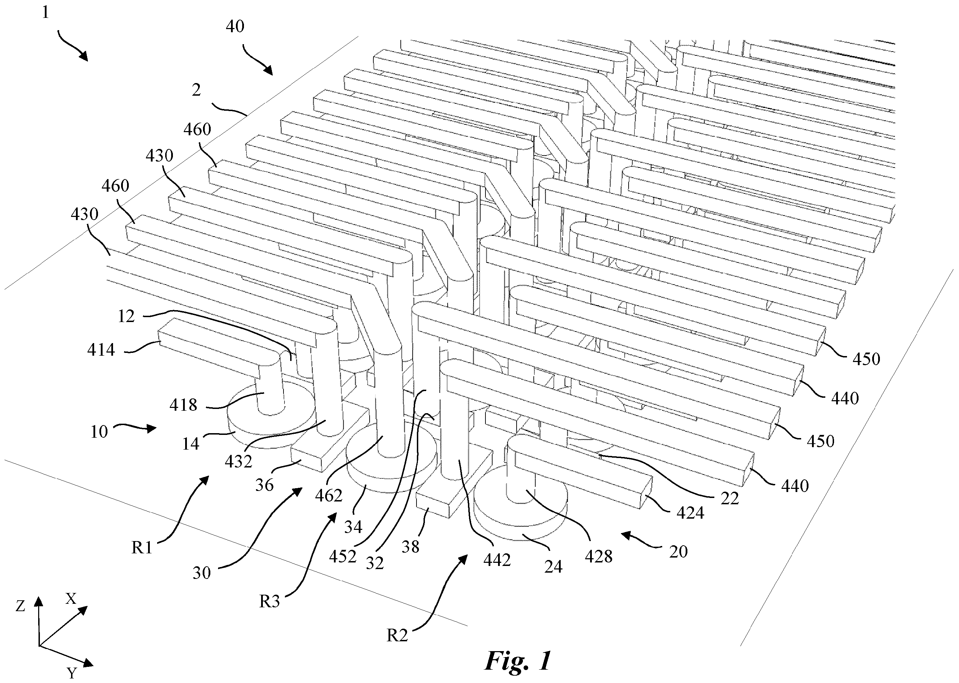

Fig. 1-2 show a perspective view and a top-down view of an example embodiment of a quantum device 1.

As may be appreciated, the figures may show only a limited representative portion of the quantum device 1 and a quantum device may in practice extend beyond the shown portions and define a considerably larger qubit array comprising a larger number of quantum dots. A quantum device according to the present disclosure enables a scalable architecture providing a promising path towards qubit arrays for, potentially, millions of qubits.

The quantum device 1 comprises a semiconductor substrate 2 and a first and second set of control gates 10, 20. The first and second set of control gates 10, 20 are arranged in a qubit array region A of the quantum device 1. The first set of control gates are configured to define a first row of electrostatically confined quantum dots R1 along the substrate 2. The second set of control gates 20 are configured to define a second row of electrostatically confined quantum dots R2 along the substrate 2. The first and second rows of quantum dots R1, R2 extend in parallel in the row direction X and are spaced apart in the column direction Y.

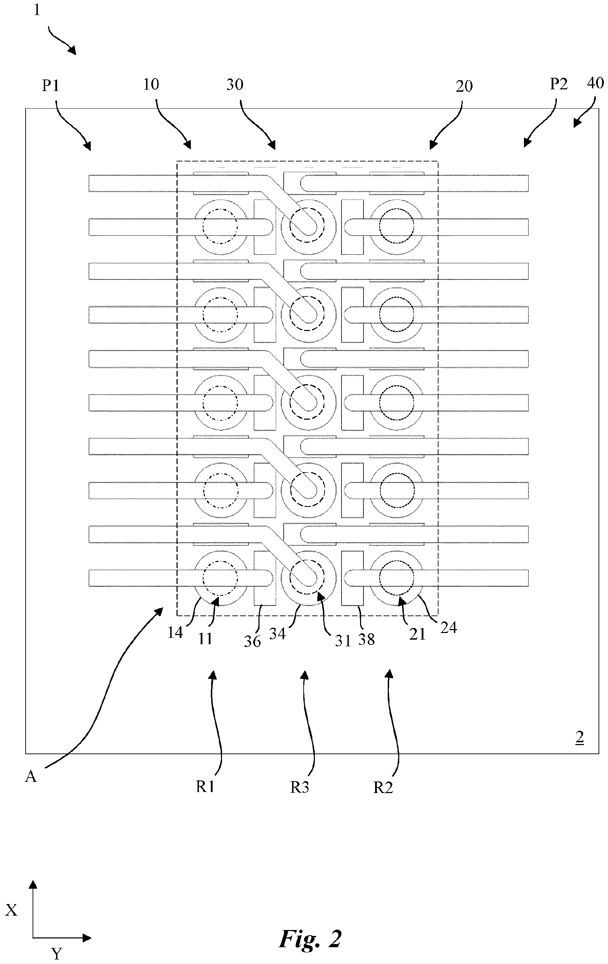

The approximate locations of the individual quantum dots of the first and second rows R1, R2 are shown in Fig. 2, wherein the quantum dots of the first row R1 are indicated by dash-dotted circular outlines 11 and the quantum dots of the second row R2 are indicated by dotted circular outlines 21.

Each quantum dot is suitable for, i.e., configured to, hold one or more electrons or holes defining a qubit, wherein a state of each qubit is defined by the electron(s) or hole(s) spin state. Each qubit may for example be a single-electron qubit or a single-hole qubit.

The substrate 2 may comprise a semiconductor layer, such as a silicon layer, e.g., of isotropically purified silicon. Other example materials for the substrate 2 include GaAs and SiGe. While not individually shown, the substrate 2 may further comprise a dielectric layer arranged on top of the semiconductor layer and defining a dielectric-semiconductor interface along the substrate 2. The control gates 10, 20 may thus be separated from the semiconductor surface of the semiconductor layer by a thickness of the dielectric layer, wherein each quantum dot 11, 21 may be defined at the dielectric-semiconductor interface. The dielectric layer may for example be a silicon oxide layer, or another suitable oxide material. The thickness of the dielectric layer between the semiconductor layer and the control gates 10, 20 may for example be in a range from 5 to 20 nm.

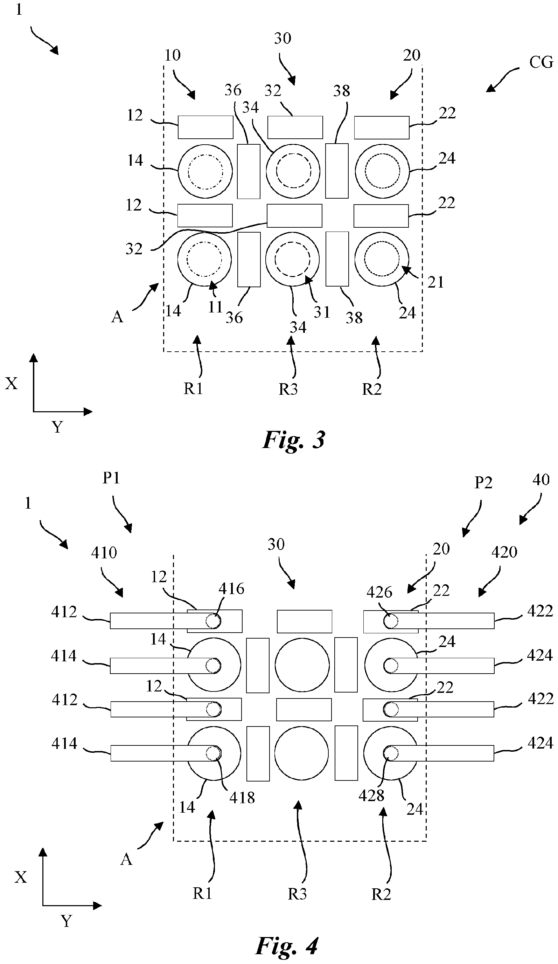

The configuration of the first and second control gates 10, 20 may be better appreciated from Fig. 3 showing, in isolation, a top-down view of a layout of a control gate plane CG of the quantum device 1. The gate plane CG is parallel to the substrate 2 and the XY-plane. The gate plane CG comprises, and is common to, the first and second of control gates 10, 20 (and optionally also control gates of the qubit bus 30, discussed below).

The first set of control gates 10 may as shown comprise first barrier gates 12 and first plunger gates 14 arranged alternatingly along the first row of quantum dots R1. The second set of control gates 20 may comprise second barrier gates 22 and second plunger gates 24 arranged alternatingly along the second row of quantum dots R2.

During operation of the quantum device 1, the barrier gates 12, 22 may be biased to cause a depletion of free electrons (or holes) underneath the gates 12, 22, thereby creating an electrostatic confined quantum dot for holding a qubit along the substrate 2, at a location between each pair of first barrier gates 12 and second barrier gates 22. The electrochemical potential of each quantum dot may be controlled via a bias voltage of the respective plunger gate 14, 24 above each quantum dot. Each quantum dot 11, 21 may thus be defined at a location underneath a respective plunger gate 14, 24 (see e.g. Fig. 2).

The barrier gates 12, 22 may have substantially equal gate lengths and be arranged with a substantially uniform pitch. The terms "gate length" and "pitch" are here both defined along the row direction X. The plunger gates 14, 24 may correspondingly have substantially equal gate lengths and be arranged at a substantially central position between a respective pair of barrier gates 12 or 14. This allows defining the rows R1, R2 of quantum dots 11, 21 with a substantially regular pitch corresponding to the pitch of the barrier gates. For further uniformity of the control gates 10, 20, the barrier gates 12, 22 and the plunger gates 14, 24 may optionally have substantially equal gate lengths.

By way of example, the quantum dot pitch of the first and second rows R1, R2 may be on the order of 50 to 150 nm. The pitch of the barrier gates 12, 22 may be in the range of 50 to 150 nm. The center-to-center distance between a barrier gate 12 or 22 and an adjacent plunger gate 14 or 14 may be approximately half the barrier gate pitch. The gate length of the barrier gates 12, 22 and/or plunger gates 14, 24 may be 20 to 70 nm.

The quantum device 1 may, during operation, be configured to apply an at least substantially uniform bias voltage to each barrier gate 12, 22. The tunnel barriers heights between consecutive quantum dots along each row R1, R2 may thus be substantially uniform. A tunnel barrier height may for example be in the range of 5-15 meV. This may correspond to a tunnel coupling t_{c} of about 1 GHz, assuming a quantum dot pitch in the aforementioned range. Greater values of the tunnel coupling may be obtained with lower tunnel barrier heights. For example, a tunnel coupling t_{c} in a range of 10-100 GHz may be achieved with a tunnel barrier height in the range of 40-400 meV. The voltages of the plunger gates 14, 24 may be set such that one or zero electrons (or holes) may be confined in the associated quantum dot.

The quantum device 1 further comprises a qubit bus 30 configured to define a row of qubit sites R3 extending along the semiconductor substrate 2. The row of qubit sites R3 extends in the row direction X, in parallel to and between the first and second rows of quantum dots R1, R2. As will be further described in the following, each quantum dot of the first and second rows R1, R2 is configured to be tunnel coupled to a qubit site of the row of qubit sites R3 so as to allow a spin qubit to be transferred between any quantum dot of the first or second row R1, R2 and a qubit site of the qubit bus 30. The qubit sites of the qubit bus 30 are further configured to be sequentially tunnel coupled to each other so as to allow a spin qubit transferred to the qubit bus 30 to be shuttled between the qubit sites of the row of qubit sites R3.

In the depicted example, each qubit site is formed by a respective quantum dot. The row of qubit sites of the qubit bus 30 is thus defined by a (single) third row of electrostatically confined quantum dots R3. The approximate locations of the individual quantum dots of the R3 are shown in Fig. 2, wherein the quantum dots of the third row R3 are indicated by dashed circular outlines 31.

The third row of quantum dots R3 of the qubit bus 30 may like the first and second rows of quantum dots R1, R2 be defined by a set of control gates of the qubit bus 30 (a third set of control gates). As shown in Fig. 1, and more clearly in Fig. 3, the third set of control gates may comprise first transfer gates 36 and second transfer gates 38 arranged at laterally opposite sides of the row of qubit sites R3. The qubit bus 30 may further comprise barrier gates 32 and plunger gates 34 arranged alternatingly along the row of qubit sites R3. Each first transfer gate 36 may be arranged between a plunger gate 14 of the first set of control gates 10 and a plunger gate 34 of the qubit bus 30. Correspondingly, each second transfer gate 38 may be arranged between a plunger gate 24 of the second set of control gates 20 and a plunger gate 34 of the qubit bus 30. Each plunger gate 34 of the qubit bus 30 may for example be arranged between a respective first plunger gate 36 and a respective second plunger gate 38.

Each first transfer gate 36 is configured to control a tunnel coupling between a respective pair of quantum dots formed by a quantum dot 11 of the first row of quantum dots R1 and a quantum dot 31 of the row of qubit sites R3. Each second transfer gate 38 is configured to control a tunnel coupling between respective pair of quantum dots formed by a quantum dot 21 of the second row of quantum dots R2 and a quantum dot 31 of the row of qubit sites R3. The first and second transfer gates 36, 38 may hence interchangeably be referred to as first and second lateral barrier gates 36, 38, respectively.

The third set of control gates of the qubit bus 30 may as shown in Fig. 3 be arranged in the common gate plane CG, together with the first and second sets of control gates 10, 20.

The discussion of the barrier and plunger gates 12, 14, 22, 24 of the first and second sets of control gates 10, 20 applies correspondingly to the barrier and plunger gates 32, 34 of the third set of control gates 30. Accordingly, the barrier gates 32 are configured to control a tunnel coupling between the quantum dots 31 of the row of qubit sites R3. The plunger gates 34 are configured to control the electrochemical potential of the respective quantum dots 31 defined underneath each plunger gate 34.

The barrier and plunger gates 32, 34 may be arranged with pitches and gate lengths corresponding to (e.g., substantially equal to) the respective counterparts of the barriers and plunger gates 12, 14, 22, 24 of the first and second control gates 10, 20.

The plunger gates 14, 24, 34 of the first, second and third sets of control gates may as shown be arranged to define a plurality of first gate columns spaced apart along the row direction X, each first gate column extending along the column direction Y and comprising a respective set of plunger gates, a first plunger gate 14, a second plunger gate 24, and a third plunger gate 34 intermediate the first and second plunger gates 14, 24.

Each first gate column may further comprise a respective first transfer gate 36 arranged between the first plunger gate 14 and third plunger gate 34, and/or a respective second transfer gate 38 arranged between the second plunger gate 24 and third plunger gate 34.

Correspondingly, the barrier gates 12, 22, 32 of the first, second and third sets of control gates may as shown be arranged to define a plurality of second gate columns spaced apart along the row direction X, each second gate column extending along the column direction Y and comprising a respective set of barrier gates 12, 22, 32. The first and second gate columns may alternate each other along the row direction.

The provision of the barrier and plunger gates 32, 34 enables the quantum device 1 to implement shuttling of qubits (e.g., coherent shuttling) along the qubit bus 30 by varying the potentials at the quantum dots 31 along the third row R3. Qubit shuttling from a first quantum dot to a second neighboring quantum dot may as per se is known in the art be achieved by varying the relative depths of the potential wells (e.g., using the associated plunger gates 34) and/or the tunnel barrier height (e.g., using the associated barrier gate 32) between the potential wells / quantum dots such that the qubit (electron or hole) may tunnel from the first to the second quantum dot.

Whereas the barrier and plunger gates 32, 34 facilitate qubit shuttling along the qubit bus 30, the transfer gates 36, 38 facilitate transfer of qubits between the third row of quantum dots R3 and the first and second rows of quantum dots R1, R2 in a corresponding manner (e.g., by controlling the depths of the potential wells and/or the tunnel barrier height).

The qubit bus 30 may further be used for loading and unloading qubits to/from the first and second rows of quantum dots R1, R2. The quantum device 1 may comprise a conventional reservoir gate (not shown) arranged adjacent an input of the qubit bus 30 (e.g., a terminal quantum dot of the qubit bus 30) and configured to define a qubit reservoir (e.g., 2DEG) being tunnel coupled to the input. Qubits may then be transferred to the input of the qubit bus 30, sequentially shuttled along the qubit bus 30 and then transferred from the qubit bus 30 to respective quantum dots of the first and second rows R1, R2. Qubit unloading may proceed by reversing this approach. However, as also the respective quantum dots of the first and second rows of quantum dots R1, R2 are sequentially tunnel coupled, qubits may also be directly loaded to / unloaded from the rows R1, R2 by providing corresponding reservoir gates adjacent to and tunnel coupled to one of more quantum dots of the respective rows R1, R2.

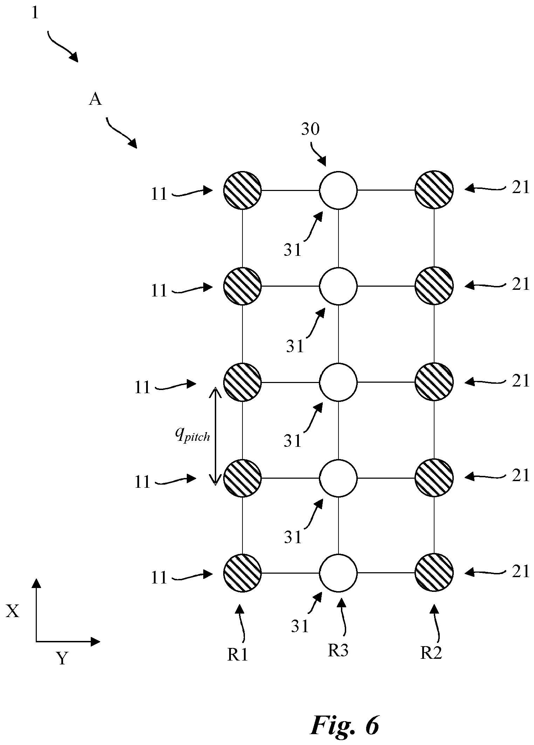

Fig. 6 shows a corresponding schematic representation of the qubit array region A defined by the quantum device 1. More specifically, Fig. 6 schematically depict a top-down view of the array region A comprising the first, second and third rows of quantum dots R1, R2, R3, but where the associated structural elements of the quantum device 1 have been omitted for purpose of illustrative clarity.

Fig. 6 represents the qubit array region A during an operational state wherein the quantum dots 11, 21 of the first and second rows R1, R2 are loaded with qubits (indicated by the diagonal hatching in the quantum dots 11, 21) but no qubits are held in any of the quantum dots 31 of the qubit bus 30 (indicated by the absent of fill pattern in the quantum dots 31). That is, the qubit bus 30 is shown in an un-used state.

The quantum dots 11 of the first row of quantum dots R1, the quantum dots 21 of the second row of quantum dots R2, and the quantum dots 31 of the row third row R3 (i.e., the qubit sites of the qubit bus 30) may as shown be arranged with a substantially uniform pitch (*q_{pitch}*)*.*

As signified by the connecting lines between pairs of neighboring quantum dots in Fig. 6, each quantum dot 31 (i.e., each qubit site) of the row of qubit sites R3 of the qubit bus 30 may be configured to be defined between and tunnel coupled to a quantum dot 11 of the first row R1 and a quantum dot 21 of the second row R2.

Each quantum dot 31 of the row of qubit sites R3 (i.e., each qubit site) may further be aligned, along the column direction Y, with a respective quantum dot 11 of the first row of quantum dots R1 and a respective quantum dot 21 of the second row of quantum dots R2. The quantum dots 11, 21, 31 may thus be arranged in a plurality of columns extending in the column direction Y and being spaced apart along the row direction X, each column comprising a respective quantum dot 11 of the first row R1, a respective quantum dot 21 of the second row R2 and a respective quantum dot 31 of the third row R3. A pitch and spacing (*d*) of the quantum dots 11, 21, 31 of the respective columns / along the column direction Y may be in a same range as discussed with reference to the pitch and spacing of the quantum dots 11, 21, 31 along the row direction X. The quantum dot pitch along the row and column directions X, Y may for instance be substantially equal.

In the depicted example of the qubit array region A, each quantum dot 31 (i.e. qubit site) of the third row R3 is tunnel coupled to both a respective quantum dot 11 of the first row R1 and a respective quantum dot 21 of the second row R2. In general, this configuration may increase a mutual interface or overlap between the qubit bus 30 and each of the first and second rows of quantum dots R1, R2. It may in turn reduce the total number of shuttles needed to bring a qubit from any given quantum dot of the first row R1 to a qubit site of the qubit bus 30 coupled to any given quantum dot of the second row R2 (or vice versa).

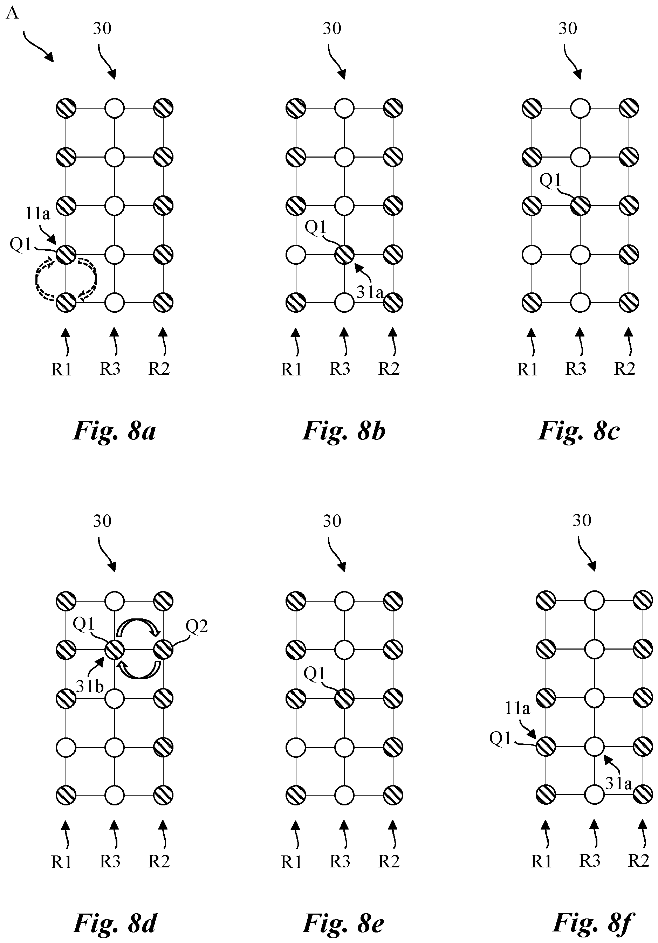

However, other implementations are also possible. For instance, the qubit bus 30 may comprise qubit sites coupled to only one of the first and second rows or quantum dots R1, R2. An example is shown in Fig. 8, showing an example of a qubit array region A and qubit bus 30 wherein a number of quantum dots 31a (e.g., a subset of the row of quantum dots of the qubit bus 30) are coupled to a respective quantum dot 11a of the first row R1 but not to any quantum dot of the second row R2. As further shown in Fig. 8, the qubit bus 30 may additionally, or alternatively, comprise a number of quantum dots 31b coupled to a respective quantum dot 21a of the first row R2 but not to any quantum dot of the first row R1. The number of quantum dots 31a and 31b connected to only one of the first and second rows R1, R2 shown in Fig. 8 is merely an example and the qubit bus 30 may comprise more or fewer such quantum dots 31a, 31b.

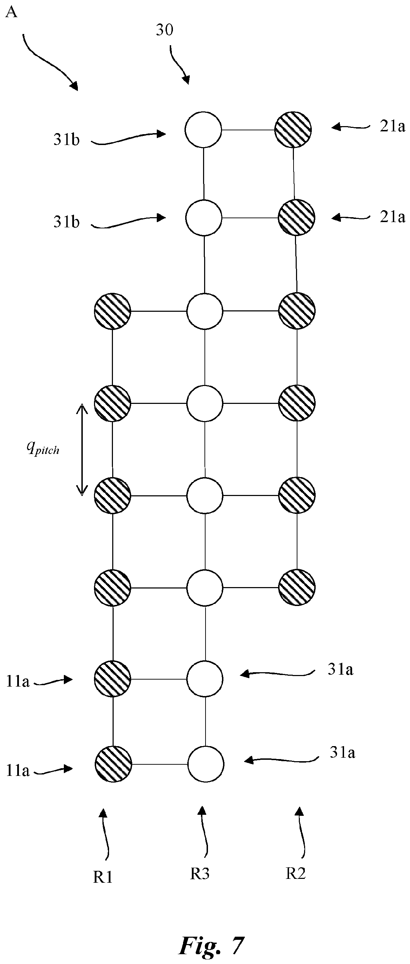

As mentioned above, the figures may represent only a limited representative portion of the qubit array region A or the quantum device 1. Accordingly, the depicted configuration in Fig. 7 or 8 may be repeated a plurality of times such that a quantum device with a much greater number of qubits may be realized. Where the configuration of the qubit array region A shown in Fig. 8 is repeated, the quantum device may thus comprise a first row of quantum dots R1 comprising sections or subsets of consecutive quantum dots of substantially uniform pitch (*q_{pitch}*) separated by gaps of one or more quantum dot pitches (*l***q_{pitch}*)*.* Correspondingly, the quantum device may comprise a second row of quantum dots R2 comprising sections or subsets of consecutive quantum dots of substantially uniform pitch (*q_{pitch}*) separated by gaps of one or more quantum dot pitches (*l***q_{pitch}*)*.* In this non-limiting example, the sections of substantially uniform pitch of the first and second rows R1, R2 would each be six quantum dot pitches while the gaps would be two quantum dot pitches (*l*=2). This configuration of quantum dots may equivalently be described as a plurality of first rows of (consecutive) quantum dots R1 of substantially uniform pitch, aligned along the row direction X and separated by gaps of one or more quantum dot pitches, and a plurality of second rows of (consecutive) quantum dots R2 of substantially uniform pitch, aligned along the row direction X and separated by gaps of one or more quantum dot pitches.

Introducing gaps in the rows of quantum dots, along the qubit bus 30 as discussed above may simply fan-out planning by creating spaces at regular intervals. Such spaces may be used to accommodate other structures, such as interconnects to the control gates, reservoir gates for feeding adjacent quantum dots along the first or second rows R1, R2, resonator circuitry etc. The gaps may further be useful to mitigate cross-talk between quantum dots along the row direction X.

Reference is now again made to Fig. 1, 2, 4 and 5, further depicting an interconnect structure 40 of the quantum device 1, comprising interconnects for the first and second sets of control gates 10, 20 and the control gate of the qubit bus 30.

The interconnect structure 40 may comprise a number of layers or levels, typically two or more, each comprising a set of horizontal interconnects (e.g., metal lines or traces) extending in a plane parallel to the substrate 2 and XY-plane, and a set of vertical interconnects (e.g., metal vias) extending vertically along the Z-direction. The interconnects may be embedded in one or more layers of interlayer dielectric material, e.g., an oxide such as silicon oxide or some other conventional suitable low-k dielectric material.

The interconnect structure 40 comprises a first through sixth set of horizontal interconnects 410, 420, 430, 440, 450, 460. These horizontal interconnects are distributed between a first and second interconnect level of the interconnect structure 40. More specifically, the first and second sets of horizontal interconnects 410, 420 are arranged in the first interconnect level. The third, fourth, fifth and sixth set of horizontal interconnects 430, 440, 450, 460 are arranged in the second interconnect level.

The horizontal interconnects 410, 420, 430, 440, 450, 460 are in turn connected to respective gates of the control plane CG by respective sets of vertical interconnects, e.g., 416, 418, 426, 428, 432, 442, 452, 462.

The horizontal interconnects 410, 420, 430, 440, 450, 460 may further be coupled to control circuitry, outside the depicted regions of the quantum device 1. The control circuitry may be configured to provide control signals and/or gate voltages to the control gates 10, 20 and the qubit bus 30.

In the illustrated example, the first interconnect level is arranged on top of and consecutive to the gate plane GC. The second interconnect level is arranged on top of and consecutive to the first interconnect level. Accordingly, the interconnects of the first interconnect level are obscured by the interconnects of the second interconnect level in the perspective view of Fig. 1 (partly) and the top-down view of Fig. 2 (completely).

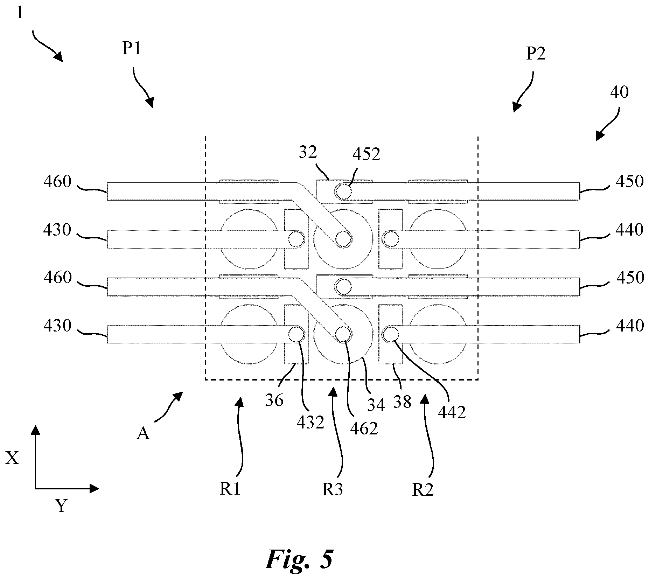

Fig. 4 provides an unobscured top-down view of a subset of the first and second horizontal interconnects 410, 420 and associated vertical interconnects 416, 418, 426, 428 of the first interconnect level. Fig. 5 provides a corresponding top-down view of the third, fourth, fifth and sixth set of horizontal interconnects 430, 440, 450, 460 and associated vertical interconnects 432, 442, 452, 462 of the second interconnect level.

In the following, reference will be made to a first peripheral region P1 and a second peripheral region P2 which, as shown in the figures, designate respective regions extending alongside and being located on laterally opposite sides (along the column direction Y) of the qubit array region A.

With reference to Fig. 4, the first set of horizontal interconnects 410 extends from the first peripheral region P1 into the qubit array region A to overlap the first set of control gates 10. The first set of horizontal interconnects 410 comprises first horizontal barrier gate interconnects 412 and first horizontal plunger gate interconnects 414 (which for brevity in the following may be referred to merely as first horizontal interconnects 412, 414).

The first set of horizontal interconnects 410 are coupled to the first set of control gates 10 via a first set of vertical interconnects 416, 418. More specifically, each first horizontal interconnect 412 extends from the first peripheral region P1 into the qubit array region A to overlap a respective barrier gate 12. Each first horizontal interconnect 412 is in turn coupled to the respective barrier gate 12 by a respective vertical interconnect 416 arranged at the crossing between the first horizontal interconnect 412 and the respective barrier gate 12. Each first horizontal interconnect 414 extends from the first peripheral region P1 into the qubit array region A to overlap a respective plunger gate 14. Each first horizontal interconnect 414 is in turn coupled to the respective plunger gate 14 by a respective vertical interconnect 418 arranged at the crossing between the first horizontal interconnect 414 and the respective plunger gate 14.

The second set of horizontal interconnects 420 extends from the second peripheral region P2 into the qubit array region A to overlap the second set of control gates 20. The second set of horizontal interconnects 420 comprises second horizontal barrier gate interconnects 422 and second horizontal plunger gate interconnects 424 (which for brevity in the following may be referred to merely as second horizontal interconnects 422, 424).

The second set of horizontal interconnects 420 are coupled to the second set of control gates 20 via a second set of vertical interconnects 426, 428. More specifically, each second horizontal interconnect 422 extends from the second peripheral region P2 into the qubit array region A to overlap a respective barrier gate 22. Each second horizontal interconnect 422 is in turn coupled to the respective barrier gate 22 by a respective vertical interconnect 426 arranged at the crossing between the second horizontal interconnect 422 and the respective barrier gate 22. Each second horizontal interconnect 424 extends from the second peripheral region P2 into the qubit array region A to overlap a respective plunger gate 24. Each second horizontal interconnect 424 is in turn coupled to the respective plunger gate 24 by a respective vertical interconnect 428 arranged at the crossing between the second horizontal interconnect 424 and the respective plunger gate 24.

With reference to Fig. 5, the third set of horizontal interconnects 430 extends from the first peripheral region P1 into the qubit array region A to overlap the first transfer gates 36. The third set of horizontal interconnects 430 are coupled to the first transfer gates via a third set of vertical interconnects 432. More specifically, each third horizontal interconnect 430 extends from the first peripheral region P1 into the qubit region A to overlap a respective first transfer gate 36. Each third horizontal interconnect 430 is in turn coupled to the respective first transfer gate 36 by a respective a vertical interconnect 432 arranged at the crossing between the third horizontal interconnect 430 and the first transfer gate 36.

The fourth set of horizontal interconnects 440 extends from the second peripheral region P2 into the qubit array region A to overlap the second transfer gates 38. The fourth set of horizontal interconnects 440 are coupled to the second transfer gates via a fourth set of vertical interconnects 442. More specifically, each fourth horizontal interconnect 440 extends from the second peripheral region P2 into the qubit region A to overlap a respective second transfer gate 38. Each fourth horizontal interconnect 440 is in turn coupled to the respective second transfer gate 38 by a respective a vertical interconnect 442 arranged at the crossing between the fourth horizontal interconnect 440 and the second transfer gate 38.

The fifth set of horizontal interconnects 450 extends from the second peripheral region P2 into the qubit array region A to overlap the barrier gates 32 of the qubit bus 30. The fifth set of horizontal interconnects 450 are coupled to the barrier gates 32 via a fifth set of vertical interconnects 452. More specifically, each fifth horizontal interconnect 450 extends from the second peripheral region P2 into the qubit region A to overlap a respective barrier gate 32 of the qubit bus 30. Each fifth horizontal interconnect 450 is in turn coupled to the respective barrier gate 32 by a respective vertical interconnect 452 arranged at the crossing between the fifth horizontal interconnect 450 and the barrier gate 32.

The sixth set of horizontal interconnects 460 extends from the first peripheral region P1 into the qubit array region A to overlap the plunger gates 34 of the qubit bus 30. The sixth set of horizontal interconnects 460 are coupled to the plunger gates 34 via a sixth set of vertical interconnects 462. More specifically, each sixth horizontal interconnect 460 extends from the first peripheral region P1 into the qubit region A to overlap a respective plunger gate 34 of the qubit bus 30. Each sixth horizontal interconnect 460 is in turn coupled to the respective plunger gate 34 by a respective vertical interconnect 462 arranged at the crossing between the sixth horizontal interconnect 460 and the plunger gate 34.

In Fig. 4 and 5, the first through sixth sets of horizontal interconnects 410, 420, 430, 440, 450, 460 each have a longitudinal extension parallel to the column direction Y.

The respective horizontal interconnects of the first through fifth sets of horizontal interconnects 410, 420, 430, 440, 450 are further each aligned with their respective coupled gate (i.e., the respective associated gate) along the column direction Y (i.e., aligned with the gate column of the respective coupled gate).

Each horizontal interconnect 414, 424 is aligned with the respective first gate column comprising the associated plunger gate 14, 24. Each horizontal interconnect 412, 422 is aligned with a respective second gate column comprising the associated barrier gate 12, 22. Each horizontal interconnect 430, 440 is aligned with the respective first gate column comprising the associated transfer gate 36, 38. Each horizontal interconnect 450 is aligned with the respective second gate column comprising the associated barrier gate 32.

Each horizontal interconnect 460 comprises a main interconnect portion parallel to the column direction Y. Each horizontal interconnect 450 further comprises an angled end portion extending diagonally (i.e., at a non-zero angle with respect to the column direction Y) from the main interconnect portion to overlap the respective associated plunger gate 34. The main interconnect portion is offset with respect to the second gate column comprising the associated plunger gate 34. For instance, the main interconnect portion may as shown be aligned with a respective neighboring first gate column to the respective second gate column comprising the associated plunger gate 34. This partly diagonal routing of the sixth horizontal interconnects 460 allows the third, fourth, fifth and sixth sets of horizontal interconnects to be co-located in a common interconnect level. The first through sixth sets of local interconnects for the control gates of the first, second and third sets of control gates may accordingly be accommodated within only two interconnect layers.

In other examples, the sixth set of horizontal interconnects 460 may instead be arranged in a third interconnect level on top of the second interconnect level. In this case, each sixth horizontal interconnect 460 may be aligned with the respective first gate column comprising the associated plunger gate 34, and extend along the column direction Y to overlap the associated plunger gate 34. An angled end portion may thus be omitted. Where the sixth set of horizontal interconnects 460 are arranged in a third interconnect level, some or all of the sixth set of horizontal interconnects 460 may instead extend into the qubit array region A from the second peripheral region P2. As may be appreciated, a third interconnect level may provide additional flexibility in terms of fan-out. For example, some or all of the fourth and/or fifth sets of horizontal interconnects 440, 450 may be shifted to the third interconnect level to further reduce routing congestion in the second interconnect level.

An example of a two-qubit gate operation which may be implemented by the quantum device 1 will now be described with reference to Fig. 8a-f, showing same schematic representation of the qubit array region A as Fig. 6. Non-limiting examples of two-qubit operations that may be applied to qubit pairs of the qubit array region A include the *SWAP* gate, the CNOT gate, etc.

In Fig. 8a, all qubits are held in the first and second rows of quantum dots R1, R2 and the quantum dots (i.e., qubit sites) of the qubit bus 30 are unused or unoccupied.

The qubit operation is to be applied to a first qubit Q1 and a second qubit Q2. In Fig. 8a, the first qubit Q1 is held in a first quantum dot 11a of the first row of quantum dots R1 and the second qubit Q2 is held in a second quantum dot 21a of the second row of quantum dots R2. Prior to transferring the first qubit Q2 to the qubit bus 30, an initial two qubit operation may be applied to the first qubit Q1 and a neighboring qubit of the first row R1, as schematically indicated by the dashed arrows in Fig. 8a.

In Fig. 8b, the first qubit Q1 has been transferred from the first quantum dot 11a to a first quantum dot 31a (i.e., a first qubit site) of the third row R3 tunnel coupled to the quantum dot 11a. As mentioned above, the transfer may be effected by varying the relative depths of the potential wells (e.g., using the associated plunger gates 14, 34) and/or the tunnel barrier height (e.g., using the associated first transfer gate 36) between the potential wells / quantum dots 11a, 31a such that the qubit Q1 may tunnel the quantum dot 11a to the quantum dot 31a.

In Fig. 8c-d the first qubit Q1 has been sequentially shuttled to a second quantum dot 31b (i.e., a second qubit site) along the third row R3 tunnel coupled to the second quantum dot 21a holding the second qubit Q2.

In Fig. 8d, the two-qubit gate operation is applied to the first qubit Q1 in the second quantum dot 31b of the qubit bus 30 and the second qubit Q2 in the second quantum dot 21a of the second row R2. The two-qubit gate operation may be performed by tuning an exchange coupling between the first and second qubits Q1, Q2. The exchange coupling may be tuned by varying a tunnel coupling or energy detuning between the quantum dots 31b, 21a.

A two-qubit gate operation on qubits in a pair of tunnel coupled quantum dots may, as per se is known in the art, be implemented using electron spin resonance (ESR) or electric dipole spin resonance (EDSR).

To facilitate either ESR and/or EDSR, the quantum dots of the first, second and third rows R1, R2, R3 may be arranged in a magnetic field having an out-of-plane component (e.g. along the Z direction). For EDSR, the magnetic field may further comprise a magnetic field gradient with a non-zero in-plane component (e.g. parallel to the XY-plane) at each quantum dot. The magnetic fields may be generated by a magnetic arrangement of one or more permanent magnets and/or electromagnets arranged within the qubit array region A and/or the peripheral regions P1, P2. For example, nanomagnets may be disposed along the rows of quantum dots R1, R2, R3. The magnetic fields may also be generated by one or more magnets external to the quantum device 1.

In ESR, an AC magnetic control field resonant with the qubits Q1, Q2 may be applied to rotate the spins relative the external magnetic field. For this purpose, the quantum device 1 may further comprise radio frequency generating circuitry for supplying ESR-control signals to ESR transmission lines to implement ESR-based qubit control in a conventional manner.

In EDSR, the spin states may instead be manipulated by radio-frequency AC electric fields. EDSR may enable more efficient and less complex pulse schemes for qubit control compared to ESR. The AC electric fields may be adapted to induce an oscillating movement of the respective qubits along the direction of the non-zero in-plane gradient. For example, an oscillation amplitude of about 1 nm is readily achievable by varying a potential of one or more adjacent gates to the quantum dot holding the qubit bit to be manipulated, such as a transfer gate 36, 38 or barrier gate 12, 22, 32.

As depicted in Fig. 8e and 8f, after applying the qubit control signals, the first qubit Q1 may be shuttled back to the first qubit site 31a along the third row R3 to the first quantum dot 31a (qubit site) of the qubit bus 30, and thereafter be transferred therefrom to the first quantum dot 11a, thereby completing the two-qubit gate operation.

In the above, reference has mainly been made to the configuration of the control gates of the gate plane CG defining the first and second rows R1, R2 of quantum dots, and the qubit bus 30. However, as would be understood by the skilled person, a quantum device may in general comprise additional structures and elements.

For example, to enable read-out of qubit states, the quantum device 1 may further comprise one or more radio-frequency resonators (omitted from the figures for illustrational clarity). Each resonator may be provided adjacent a respective quantum dot of the first or second row R1, R2. Alternatively, each resonator may be connected to a respective plunger gate 14 or 24 associated with the first row R1 or the second row R2 by means of a respective transmission line. As per se is known in the art, the frequency of a resonator coupled to a given plunger gate will depend on a state of a qubit held at the quantum dot associated with the plunger gate. Qubit states may thus be sensed based on the resonance frequency of a resonators, e.g., by measuring a reflectance of the resonator. It is not necessary to couple a resonator to each plunger gate along the first and/or second rows R1, R2. Rather, resonators may be coupled to plunger gates at quantum dots selected to define read-out locations. The qubit bus 30 may be used to transfer a qubit from any quantum dot along the first or second row R1, R2 to the closest read-out location when the state is to be read.

The quantum device 1 as set out above may be implemented using integrated circuit technology. That is, the semiconductor substrate 2, the control gates of the common gate plane CG and the interconnect structure 40 may be comprised in an integrated circuit.

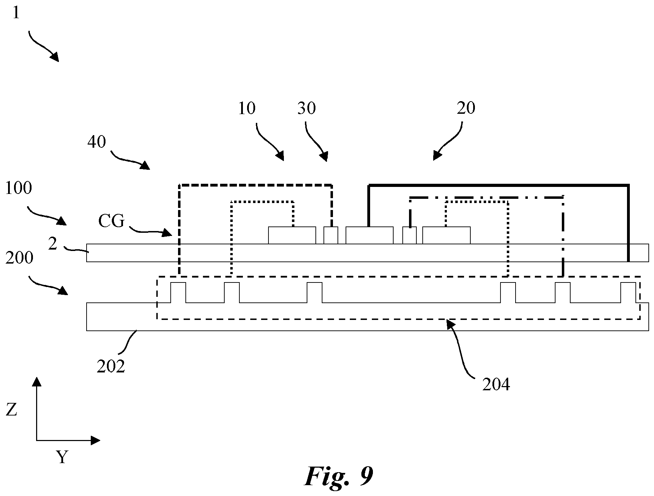

With reference to Fig. 9, there is shown a possible integrated circuit implementation of the quantum device 1, wherein the semiconductor substrate 2, the control gates of the gate plane CG (e.g., comprising the first and second set of control gates 20, 30 and the control gates of the qubit bus 30) and the interconnect structure 40 are comprised in a first integrated circuit 100 of the quantum device 1.

The quantum device 1 further comprises a second integrated circuit 200 stacked with the first integrated circuit 100. The second integrated circuit 200 comprises a second substrate 202. The substrate 202 may be a semiconductor substrate, e.g., a silicon and/or germanium-based substrate, a silicon-on-insulator substrate, or some other conventional type of substrate suitable for CMOS circuitry.

The second integrated circuit 200 further comprises control circuitry 204, schematically indicated by the dashed outline box in Fig. 9. The control circuitry 204 is coupled to the interconnect structure 40 of the first integrated circuit 100. The control circuitry 204 may be coupled to the control gates of the gate plane GC via the interconnects of the interconnect structure 40. As schematically indicated in Fig. 9, the control circuitry 204 may be coupled to horizontal interconnects of the interconnect structure 40 by vertically extending through-substrate interconnects extending through the substrate 2 of the first integrated circuit 100.

The control circuitry 204 may be configured to control the biasing of the gates of the gate plane CG. The control circuitry 204 may further be configured to provide control signals for causing the transfer of qubits between the qubit rows and the qubit bus, and the shuttling along the qubit bus. The control circuitry 204 may further be configured to cause application of qubit control signals, e.g., so as to implement the above-discussed two-qubit gate operation employing ESR and/or EDSR. To facilitate ESR, the control circuitry 204 may further be coupled to ESR resonators of the first integrated circuit 100 (not shown).

The person skilled in the art realizes that the present invention by no means is limited to the examples described above. On the contrary, many modifications and variations are possible within the scope of the appended claims. For example, while the qubit bus 30 of the illustrated examples comprises a single row of quantum dots R3, a qubit bus may in other examples comprise two or more rows or quantum dots. In other words, a qubit bus may comprise a row of columns of electrostatically confined quantum dots, each column comprising two or more tunnel coupled quantum dots.

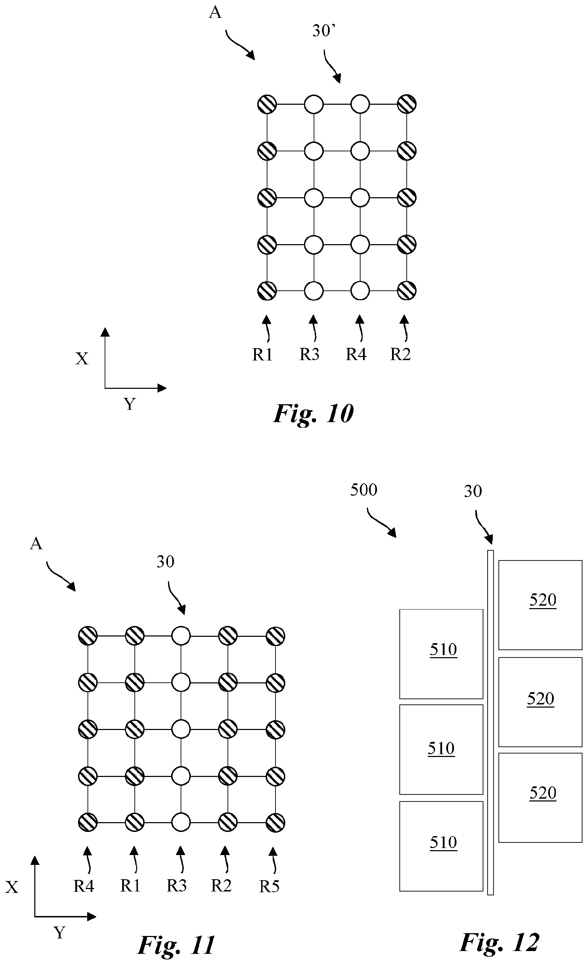

A schematic example of qubit array region A comprising a qubit bus 30' comprising more than one row of quantum dots is shown in Fig. 10.

The qubit bus 30' comprises a third row of electrostatically confined quantum dots R3 and a fourth row of electrostatically confined quantum dots R4. Each quantum dot of the third row R3 is tunnel coupled to a neighboring quantum dot of the first row R1. Each quantum dot of the fourth row R4 is tunnel coupled to a neighboring quantum dot of the second row R2. The quantum dots of the third row R3 and the fourth row R4 are respectively tunnel coupled to each other along the column direction Y.

The quantum dots of the third and fourth rows R3, R4 may be spaced apart by a further set (i.e., row) of transfer gates, corresponding to the first and second transfer gates 36, 38 discussed in connection with Fig. 3.

A qubit bus 30' as shown in Fig. 10 thus allows shuttling of qubits along two rows of quantum dots R3, R4, as well as shuttling between the rows R3 and R4. A two-qubit operation may be implemented using a corresponding approach to the approach shown in Fig. 8a-f, however with the addition of a shuttling step from the third row R3 to the fourth row R4 (prior to applying the qubit control signals) and back again (after applying the qubit control signals). The addition of a fourth row of quantum dots R4, allows a greater separation along the column direction Y between the shuttled qubit and the quantum dots of the first row R1. This may mitigate a risk of cross-talk when applying the qubit control signals.

It is contemplated that a qubit bus may be further extended to comprise more than two rows of quantum dots.

In a corresponding fashion, additional rows of quantum dots may be provided adjacent and alongside the first and second rows of quantum dots R1, R2. Fig. 11 depicts a schematic example of a qubit array region A comprising two rows of electrostatically confined quantum dots on either side of a qubit bus 30, first and fourth rows R1, R4 on one side of the qubit bus 30, and a second and fifth row R1, R5 on the other side of the qubit bus 30. The first and fourth rows R1, R4 may be defined using an extended set of first control gates corresponding to the first set of control gates 10 and comprising a further set (i.e. row) of plunger gates associated with the fourth row R4, as well as lateral transfer or barrier gates between the two sets / rows of plunger gates. Correspondingly, the second and fifth rows R2, R5 may be defined using an extended set of second control gates corresponding to the second set of control gates 20 and comprising a further set (i.e. row) of plunger gates associated with the fifth row R5, as well as lateral transfer or barrier gates between the two sets / rows of plunger gates.

The quantum dots of the first and fourth rows R1, R4 may thus be comprised in a first 2D sub-array and the quantum dots of the second and fifth rows R2, R5 may be comprised in a second 2D sub-array.

As indicated by the diagonal hatching, the quantum dots of the first, second, fourth and fifth rows R1, R2, R4, R5 may during operation all be loaded with a qubit. Two-qubit operations may hence be performed on qubits in neighboring quantum dots of the first and fourth rows R1, R4, and of the second and fifth rows R2, R5, respectively. Meanwhile, the qubit bus 30 may be used to facilitate shuttling of qubits between the first or second 2D sub-array, to facilitate two-qubit operations on qubits initially stored in different 2D sub-arrays.

To facilitate the fan-out and connections to the additional control gates, it may be beneficial to increase the number of levels of horizontal interconnects of the corresponding interconnect structure to more than two.

Although Fig. 11 shows 2D sub-arrays comprising two respective rows of quantum dots R1, R4 and R2, R5, the 2D sub-arrays may be extended to comprise more than two rows of quantum dots.

Fig. 12 schematically shows a quantum device 500 comprising a plurality of 2D sub-arrays corresponding to those of Fig. 11, a first set (or "row") of 2D sub-arrays 510 on a first side of the qubit bus 30 and a second set (or "row") of 2D sub-arrays 520 on a second opposite side of the qubit bus 30. Each 2D sub-array may comprise two or more rows of electrostatically confined quantum dots.

As shown in Fig. 12, the 2D sub-arrays 510, 520 on the respective sides of the qubit bus 30 may be spaced apart along the row direction X at regular intervals. The 2D sub-arrays 510 and 520 may as further shown be arranged in a staggered fashion along the qubit bus 30.

Although increasing the number of rows of quantum dots on either side of the qubit bus 30 will tend to increase the scaling rate from the above-discussed "optimal" scaling rate of 3xM, this implementation may still provide a scaling benefit for reasonably sized 2D sub-arrays, compared to a single square N² 2D qubit array. On the other hand, 2D sub-arrays may further reduce the number of shuttling steps required to √√N, which potentially allows scaling to billion sized qubit array.

Table 1 provides a non-limiting and illustrative comparison of various parameters for a N² 2D qubit array, a 3xM array, and a 2D sub-array implementation. A quantum dot pitch of 100 nm is assumed. The table further includes columns indicating the number of required shuttles and equivalent shuttle length for a realizing a two-qubit operation on two neighboring qubits located at the middle quantum dots of two neighboring rows of an N² 2D qubit array in the corresponding 3xM and 2D sub-arrays. It is assumed that the N² 2D qubit array is mapped to the 3xM array such that every even numbered row of the N² 2D qubit array is arranged in the first row of quantum dots R1 and every odd numbered row of the N² 2D qubit array is arranged in the second row of quantum dots R2. To provide a fair comparison, it is further assumed that the 3xM array only needs to provide the same connectivity as a 2D grid lattice, namely to the nearest neighbors. The table demonstrates that a 3xM array or 2D sub-arrays may implement a neighboring qubit interaction scheme similar to an N² 2D qubit array with a reasonable number of shuttles and shuttle length.

**Table 1**

| # of qubits | N² 2D array | 3xM array | # of shuttles | Shuttle length | 2D sub-arrays | Shuttle length |
|---|---|---|---|---|---|---|
| 100 | 10x10 | 3x50 | 10 | 1/2 µm | | |
| 1024 | 32x32 | 3x512 | 32 | 3/2 µm | | |
| 1E4 | 100x100 | 3x0.5E4 | 100 | 10/2 µm | | |
| 1E6 | 1E3x1E3 | 3x0.5E6 | 1000 | 100/2 µm | 2x32x32x1E3 / 2 | 3/2 µm |
| 1E9 | 3E4x3E4 | 3x0.5E9 | 3E4 | 3/2 mm | 2x177x177x3E4 / 2 | < 10 µm |

Moreover, while in the above, an implementation of a qubit bus 30 configured to implement shuttling of qubits between electrostatically confined quantum dots has been discussed in detail, other implementations are also possible. For instance, qubit shuttling may be implemented using a surface acoustic wave (SAW) mediated transfer between quantum dots. The qubit sites may in this case, like in the above, be electrostatically confined using control gates, such as plunger and barrier gates. However, the gate potentials may be static, whereas a SAW may be applied to modulate a tunnel barrier between first and second successive quantum dot of the qubit bus such that the qubit (e.g., electron or hole) may be transferred from a first to a second quantum dot. This may be repeated multiple times to sequentially transfer a qubit along the qubit bus. SAW may also be used to transfer qubits between the qubit bus and the first and second rows or quantum dots R1, R2.

## Claims

1. A quantum device (1) comprising:
a semiconductor substrate (2);
a first set of control gates (10) configured to define a first row of electrostatically confined quantum dots (R1, 11) and a second set of control gates (20) configured to define a second row of electrostatically confined quantum dots (R2, 21), wherein each quantum dot (11, 21) is suitable for holding a spin qubit (Q1), and wherein the first and second rows (R1, R2) extend in parallel in a longitudinal direction along the semiconductor substrate (2);
a qubit bus (30) configured to define a row of qubit sites (R3, 31) extending along the semiconductor substrate (2) in parallel to and between the first and second rows of quantum dots (R1, R2), wherein each quantum dot (11, 21) of the first and second rows (R1, R2) is configured to be tunnel coupled to a qubit site (31) of the row of qubit sites (R3) so as to allow a spin qubit (Q1) to be transferred between the quantum dot (11, 21) and the qubit bus (30), and wherein the qubit sites (31) are configured to be sequentially tunnel coupled to each other so as to allow a spin qubit (Q1) transferred to the qubit bus (30) to be shuttled between the qubit sites (31) of the row of qubit sites (R3).

2. The quantum device (1) according to claim 1, wherein each qubit site (31) of the row of qubit sites (R3) is configured to be tunnel coupled to a respective quantum dot (11) of the first row of quantum dots (R1), and/or to a respective quantum dot (21) of the second row of quantum dots (R2).

3. The quantum device (1) according to any one of the preceding claims, wherein each qubit site (31) of at least a subset of the qubit sites of the row of qubit sites (R3) is configured to be defined between and tunnel coupled to a quantum dot (11) of the first row (R1) and a quantum dot (21) of the second row (R2).

4. The quantum device (1) according to any one of the preceding claims, wherein the quantum dots (11) of the first row of quantum dots (R1), the quantum dots (21) of the second row of quantum dots (R2), and the qubit sites (31) of the row of qubit sites (R3) are defined with a substantially uniform pitch.

5. The quantum device (1) according to any one of the preceding claims, wherein each qubit site (31) of the row of qubit sites (R3) is aligned, along a lateral direction transverse to the longitudinal direction, with a respective quantum dot (11) of the first row of quantum dots (R1) and/or a respective quantum dot (21) of the second row of quantum dots (R2) .

6. The quantum device (1) according to any one of the preceding claims, wherein the qubit bus (30) comprises first transfer gates (36) and second transfer gates (38) arranged at laterally opposite sides of the row of qubit sites (R3),
wherein each first transfer gate (36) is configured to control a tunnel coupling between a respective pair of a quantum dot (11) of the first row of quantum dots (R1) and a qubit site (31) of the row of qubit sites (R3), and
wherein each second transfer gate (38) is configured to control a tunnel coupling between a respective pair of a quantum dot (21) of the second row of quantum dots (R2) and a qubit site (31) of the row of qubit sites (R3).

7. The quantum device (1) according to any one of the preceding claims, wherein each qubit sites comprises an electrostatically confined quantum dot (R3, 31), or a column of at least two tunnel coupled and electrostatically confined quantum dots.

8. The quantum device (1) according to claim 7, wherein the qubit bus (30) comprises barrier gates (32) and plunger gates (34) arranged alternatingly along the row of qubit sites (R3), wherein the barrier gates (32) are configured to control a tunnel coupling between the quantum dots (31) of the row of qubit sites (R3).

9. The quantum device (1) according to any one of the preceding claims,
wherein the first set of control gates (10) comprises first barrier gates (12) and first plunger gates (14) arranged alternatingly along the first row of quantum dots (R1), and
wherein the second set of control gates (20) comprises second barrier gates (22) and second plunger gates (24) arranged alternatingly along the second row of quantum dots (R2).

10. The quantum device (1) according to claim 9, when dependent on claim 8, wherein the first and second sets of control gates (10, 20) and the gates of the qubit bus (30) are arranged in a common gate plane (CG) parallel to the semiconductor substrate (2).

11. The quantum device (1) according to claim 10, wherein the first, second and third rows of quantum dots (R1, R2, R3) are comprised in a qubit array region (A) having a longitudinal dimension extending in the longitudinal direction, wherein the qubit array area (A) is surrounded by a first and a second peripheral region (P1, P2) on opposite lateral sides of the qubit array region (A), and wherein the quantum device (1) further comprises an interconnect structure (40) comprising:
a first set of horizontal interconnects (410) extending from the first peripheral region (P1) into the qubit array region (A) to overlap the first set of control gates (10) and being coupled thereto via a first set of vertical interconnects (416, 418),
a second set of horizontal interconnects (420) extending from the second peripheral region (P2) into the qubit array region (A) to overlap the second set of control gates (20) and being coupled thereto via a second set of vertical interconnects (426, 428),
a third set of horizontal interconnects (430) extending from the first peripheral region (P1) into the qubit array region (A) to overlap the first transfer gates (36) and being coupled thereto via a third set of vertical interconnects (432),
a fourth set of horizontal interconnects (440) extending from the second peripheral region (P2) into the qubit array region (A) to overlap the second transfer gates (38) and being coupled thereto via a fourth set of vertical interconnects (442),
a fifth set of horizontal interconnects (450) extending to overlap the barrier gates (32) of the qubit bus (30) and being coupled thereto via a fifth set of vertical interconnects (452), and
a sixth set of horizontal interconnects (460) extending to overlap the plunger gates (34) of the qubit bus (30) and being coupled thereto via a sixth set of vertical interconnects (462),
wherein the fifth set of horizontal interconnects (450) and the sixth set of horizontal interconnects (460) extend into the qubit array region (A) from the first peripheral region (P1) and the second peripheral region (P2), respectively, or vice versa.

12. The quantum device (1) according to claim 11, wherein the first and second sets of horizontal interconnects (410, 420) are arranged in a first interconnect level of the interconnect structure (40) and the third, fourth, fifth and sixth set of horizontal interconnects (430, 440, 450, 460) are arranged in an interconnect level of the interconnect structure (40) over the first interconnect level, such as in a common second interconnect level.

13. The quantum device (1) according to any one of claims 11-12, wherein the semiconductor substrate (2), the common gate plane (CG) and the interconnect structure (40) are comprised in a first integrated circuit (100) of the quantum device (1) and the quantum device (1) further comprises a second integrated circuit (200) stacked with the first integrated circuit (100) and comprising control circuitry (204) coupled to the interconnect structure (40) and configured to control the first and second sets of control gates (10, 20) and the gates of the qubit bus (30).

14. A method for operating a quantum device (1) comprising:
defining, along a semiconductor substrate (2), a first row of electrostatically confined quantum dots (R1, 11) using a first set of control gates (10), and a second set of control gates (20) of electrostatically confined quantum dots (R2, 21) using a second set of control gates (20), wherein each quantum dot (11, 21) is suitable for holding a spin qubit (Q), and wherein the first and second rows (R1, R2) extend in parallel in a longitudinal direction along the semiconductor substrate (2);
providing a qubit bus (30) by defining a row of qubit sites (R3, 31) extending along the semiconductor substrate (2) in parallel to and between the first and second rows of quantum dots (R1, R2), wherein each quantum dot (11, 21) of the first and second rows (R1, R2) is tunnel coupled to a qubit site (31) of the row of qubit sites (R3) so as to allow a spin qubit (Q1) to be transferred between the quantum dot (11, 21) and the qubit bus (30), and wherein the qubit sites (31) are sequentially tunnel coupled to each other so as to allow a spin qubit (Q1) transferred to the qubit bus (30) to be shuttled between the qubit sites (31) of the row of qubit sites (R3).

15. The method according to claim 14, comprising performing a two-qubit gate operation on a first qubit (Q1) held in a first quantum dot (11a) of the first row of quantum dots (R1) and a second qubit (Q2) held in a second quantum dot (21a) of the second row of quantum dots (R2) by:
transferring the first qubit (Q1) from the first quantum dot (11a) to a first qubit site (31a) of the row of qubit sites (R3) tunnel coupled to the quantum dot (11a);
shuttling the first qubit (Q1) along the row of qubit sites (R3) to a second qubit site (31b) tunnel coupled to the second quantum dot (21a);
applying qubit control signals implementing the two-qubit gate operation to the first qubit (Q1) in the second qubit site (31b) and the second qubit (Q2) in the second quantum dot (21a), wherein the first and second qubits (Q1, Q2) are exchange coupled;
after applying the qubit control signals, shuttling the first qubit (Q1) along the row of qubit sites (R3) to the first qubit site (31a); and
subsequently transferring the first qubit (Q1) from the first qubit site (31a) to the first quantum dot (11a).
